Europäisches Patentamt

European Patent Office (11) Publication number: **0 203 906**

Office européen des brevets A2

(12) **EUROPEAN PATENT APPLICATION**

(21) Application number: 86870074.1

(22) Date of filing: 28.05.86

(51) Int. Cl.⁴: **B 29 C 45/00**, B 29 C 45/04, B 29 C 47/32, B 32 B 31/30 // B29L9:00, B29L31:00

(30) Priority: 29.05.85 US 738803

(43) Date of publication of application: 03.12.86 Bulletin 86/49

(84) Designated Contracting States: AT BE CH DE FR GB IT LI LU NL SE

(71) Applicant: **Monsanto Company, Patent Department 800 North Lindbergh Boulevard, St. Louis Missouri 63167 (US)**

(72) Inventor: **Mantarro, Joseph, 2311 Inverness Drive, Pensacola Florida 32503 (US)**
Inventor: **Pahl, Robert, 624 Huntley Heights Drive, Manchester Missouri 63021 (US)**
Inventor: **Wright, Robert Ted, 1102 West Washington Street, Fayetteville Tennessee 37334 (US)**

(74) Representative: **McLean, Peter et al, Monsanto Europe S.A. Patent Department Avenue de Tervuren 270-272 Letter Box No 1, B-1150 Brussels (BE)**

(54) Method of making a three-dimensional laminate.

(57) Processes for forming a continuous thermoplastic laminate having a molded three-dimensional surface on a least one side thereof.

Such laminates can be formed by fusion bonding a three-dimensional thermoplastic layer being formed by continuous injection molding on a rotating mold drum to a substrate layer, which can be a generally flat sheet or optionally a three-dimensional layer. As the mold drum rotates the laminate is cooled sufficiently to allow the three-dimensional structure to be extracted from the mold drum. In a preferred process a three-dimensional layer having grass-like elements extending from a substantially uniform backing with low residual stress is laminated to a substrate to form a spray-suppression device with improved low temperature break resistance.

## METHOD OF MAKING A THREE-DIMENSIONAL
## LAMINATE

The present invention is directed to a method for producing a three-dimensional laminate. More particularly, this invention is directed to a method of fusion bonding a heat sensitive three-dimensional thermoplastic layer to a substrate without damaging the three-dimensional structure.

Processes for bonding similar and dissimilar materials together by fusion bonding are well known. Fusion bonding of running length sheet stock materials is often integrated with the sheet extrusion process. In one variant of this integrated process, lamination is accomplished by co-extrusion and mating of two or more molten sheets prior to any sizing or polishing operations. Extrusion of a single molten film onto a solid substrate has also been employed. In a related process, an extruded sheet is allowed to cool slightly to the near molten state and is laminated to another sheet after an initial pass through sizing rolls.

While the prior art methods are acceptable when the materials being laminated are substantially flat sheets or films, serious problems are encountered when one of the layers to be laminated has a three-dimensional structure which is sensitive to heat and/or pressure. Some prior art methods of fusion bonding cause melting and thermal distortion of the structure of a three-dimensional layer resulting in an unacceptable laminate. Moreover, attempts to laminate a three-dimensional layer to a substrate by some prior art fusion bonding methods can result in significant warpage of the substrate layer. Because of these problems the prior art has turned, in some instances, to alternative laminating methods such as adhesive bonding.  However, certain materials, e.g. polyolefins, can be more effectively laminated by a fusion process.

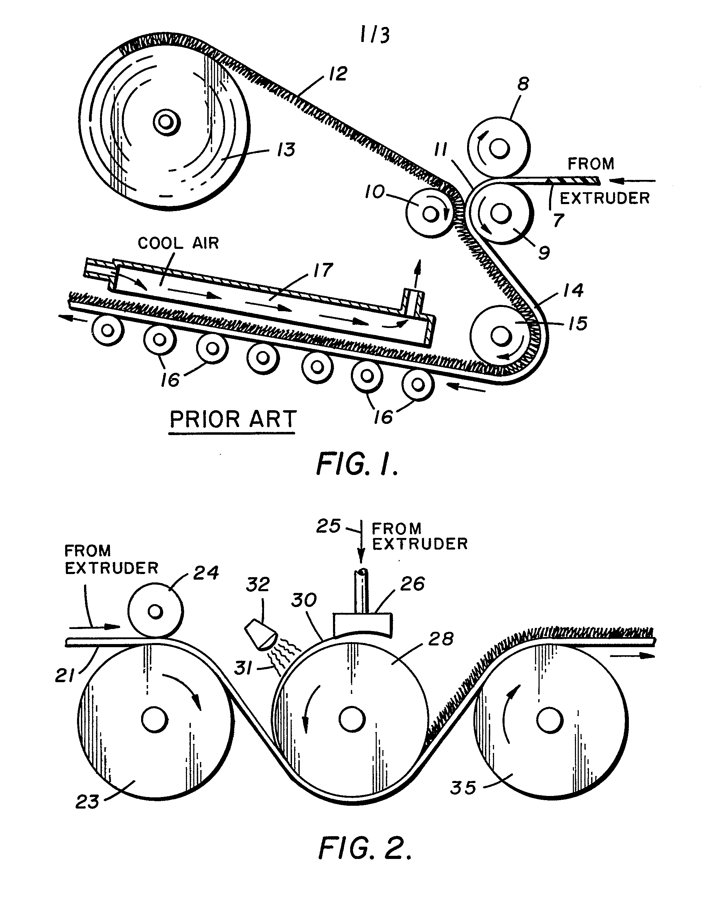

As disclosed in U.S. patent 4,329,196, processes for laminating a heat deformable three-dimensional, polyolefin layer to a substrate by fusion bonding without imparting any substantial thermal distortion to the laminate are known.  With reference to Figure 1, in such processes a near-molten extruded substrate layer 11 is passed between a sizing roll 8 and a heated roll 9 and carried in a near molten state around the heated roll.  The term "near molten state", as used herein, refers to a sheet of thermoplastic material in which the core is still at a temperature above its melting point and the surfaces have been cooled, e.g. by exposure to air, and solidified to form a surface skin.  A three-dimensional layer 12 having grass-like projections extending from a backing is intimately contacted with the near molten substrate at the nip formed by the heated roll 9 and a pressure roll 10.  The heat insulating effect of the three-dimensional layer causes the surface temperature of the substrate layer to rise, melting at least one layer at the interface so that upon solidification the two layers will bond together.  Warpage or distortion of the substrate layer is prevented by balancing the heat flow from opposing surfaces of the near molten substrate as it cools.  The temperature of the heated roll 9 is varied to provide balanced heat flow conditions.  The laminate is then passed around a cooling roll 15 to turn the grass-like surface of the laminate upward without damaging the three-dimensional structure and to cool the grass-like surface of the laminate to prevent thermal damage thereto.  The partially cooled laminate leaves roll 15 and is conveyed through a cooling zone through which a regulated flow of cooling fluid results in further conductive heat loss from the laminate.

Although the nip between rolls 10 and 9 is not so tight as to damage the grass-like surface, it is in practice sufficiently close as to cause deflection of the grass-like surface which, because of its resilience, assists in applying pressure for the intimate contact required to effect fusion bonding across the width of the laminate, thereby accommodating wide tolerance in layer thickness. It has been found that the pressure between rolls 9 and 10 required to provide such intimate contact is sufficient to impart some crushing to the three-dimensional layer. This is undesirable in those cases where the three-dimensional layer is susceptible to crushing or deformation, e.g. where straight up grass-like elements are desired on a laminate.

A further disadvantage of processes disclosed in U.S. patent 4,329,196 is that multiple processing is required. That is, a previously formed grass-like sheet is provided as roll stock to the laminating process resulting in periodic interruptions in the process.

There is also a need to provide apparatus and processes that will allow the formation of continuous sheets having a three-dimensional surface on both outer surfaces thereof, particularly molded three-dimensional surfaces.

## SUMMARY OF THE INVENTION

By this invention applicant has provided a method of making a three-dimensional laminate which overcomes the aforementioned deficiencies of the prior art.

Accordingly, a principle object of this invention is to provide a method for laminating a heat deformable, three-dimensional layer to a substrate by applying a near molten substrate layer of thermoplastic material onto the exposed surface of a three-dimensional layer being carried on a rotating mold drum. Another object of this invention is to produce a three-dimensional laminate having grass-like projections extending from a surface which are substantially straight up and free from distortion or crushing.

Still another object of this invention is to provide apparatus and process for forming a continuous laminate sheet having three-dimensional molded surfaces on both outer surfaces thereof. A further object is to provide such continuous laminate sheet having three-dimensional molded surfaces on both outer surfaces thereof.

These and other objects of the present invention are achieved by providing a process for forming a laminate made up of at least one three-dimensional, molded thermoplastic layer fusion bonded to a thermoplastic substrate layer. In one embodiment of this invention a process comprises (a) providing at least one rotating mold drum having in the peripheral surface thereof a plurality of cavities, (b) extruding onto the peripheral surface of said mold drum a molten thermoplastic material under sufficient pressure to cause the molten thermoplastic material to enter said cavities, to form a three-dimensional layer having a plurality of elongated projections extending from a backing layer having an exposed surface; and (c) then, while said three-dimensional layer remains on said drum, applying a substrate layer of thermoplastic material onto the exposed surface of said three-dimensional layer, at least one of said layers being at temperatures sufficient to cause said layers to fusion bond to each other. In preferred embodiments of this invention a substrate layer comprising a generally flat, near-molten extruded sheet is urged into intimate contact with the exposed surface of said three-dimensional layer in a nip formed by the rotating mold drum and a roller.  In other embodiments of this invention a substrate layer comprised a second three-dimensional layer with projections extending from one surface thereof.  The substantially flat backings of both three-dimensional layers are urged into intimate contact to effect fusion bonding in a nip formed by two adjacent rotating drum molds.

### BRIEF DESCRIPTION OF THE DRAWINGS

Figure 1 schematically illustrates an apparatus useful in a method of making a three-dimensional laminate according to the prior art.

Figure 2 schematically illustrates apparatus useful in a method of making a three-dimensional laminate according to this invention.

Figure 3 is a partial cross-sectional illustration of a mold drum and extrusion die useful in the process of this invention.

Figure 4 graphically illustrates temperature profiles of sheets laminated according to the process of this invention.

Figure 5 is a partial cross-sectional view of a typical mold drum.

Figures 6A and 6B are cross-sectional views of a mold cavity insert pin useful in the continuous injection molding of a grass-like, three-dimensional layer.

Figure 7 is a partial cross-sectional view of an assembly of an insert pin in a mold drum cavity.

### DESCRIPTION OF PREFERRED EMBODIMENTS

The present invention is directed to a method for laminating at least one three-dimensional layer to a substrate layer.  In one preferred embodiment of this invention a three-dimensional layer is fusion bonded to a substrate layer to provide a laminate having a three-dimensional surface on at least one side thereof.

The three-dimensional layer may take any physical form suitable for the application envisioned for the laminate.  In general three-dimensional layers which are particularly suited to the process of this invention have a three-dimensional structure which is sensitive to heat and pressure such that the fusion bonding by ordinary techniques results in thermal distortion of the three-dimensional structure.  One such particularly suitable three-dimensional layer for spray suppression devices comprises a grass-like layer with a plurality of elongated, blade-like projections extending from a layer.  Such three-dimensional layer can be advantageously produced by known continuous injection molding processes, e.g. as described by Doleman, et al. in U.S. patents 3,590,109 and 3,507,010, both of which are incorporated herein by reference. The grass-like sheets disclosed by Doleman, et al. have a plurality of upstanding randomly oriented projections extending from cup-like bases integrally molded between parallel rows of ribs.  Other three-dimensional layers which may be useful can comprise other geometric shapes, such as cylinders or rods extending from a layer, or other shapes such as thick backing with cavities or shapes within the backing.

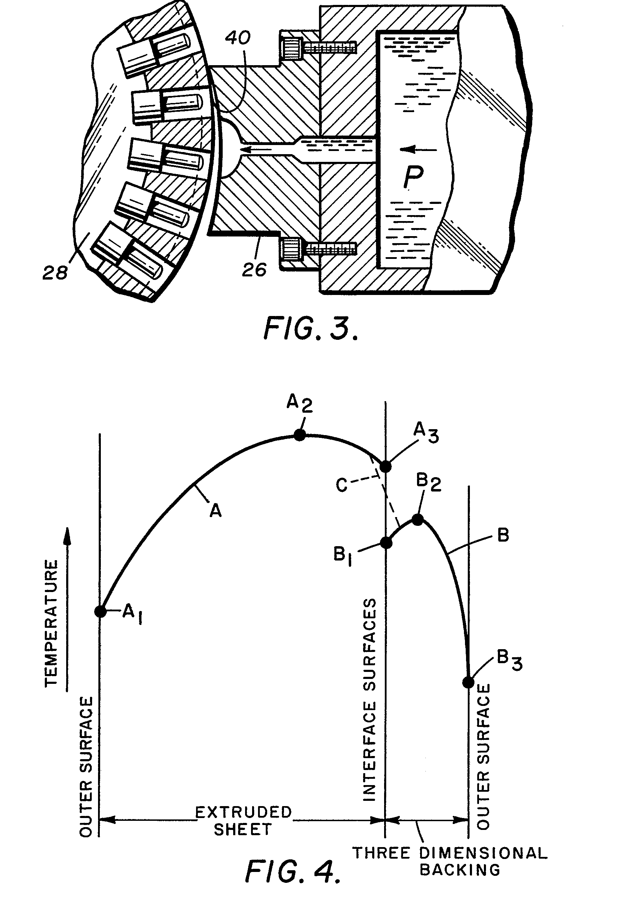

Alternatively, the continuous injection molding apparatus is preferably modified as disclosed in a commonly-owned European application claiming priority from US Serial No. 738,804 and filed May 28, 1986, incorporated herein by reference.  A partial cross-section of one embodiment of such apparatus is illustrated in Figure 3 where a rotating mold drum 28 (shown in partial cross-section) has a smooth peripheral surface except for a plurality of cavities therein.  Molten thermoplastic material P is supplied through an extrusion die 26 at sufficiently high pressure to allow the material to be injected into the cavities. The die and mold drum cooperate to form an extrusion nozzle 40 which forms a substantially uniform backing sheet which is carried from the nozzle by the rotating mold drum. The mold drum has cooling means which allow the material to solidify into a three-dimensional layer having a plurality of elongated projections (preferably blade-like) extending from a substantially uniform sheet with advantageously low residual stress levels.

In still another alternative, the three-dimensional layer can be formed by continuous rotary forming apparatus as generally disclosed by Bramhall in U.S. Patent 4,323,533, incorporated herein by reference. Such apparatus, modified to be useful in the practice of this invention, will provide a molded three-dimensional surface on one side of an extruded sheet where the other side of the sheet will have a generally flat surface which can be fusion bonded to another layer to form a laminate.

The three-dimensional and substrate layers may be chosen from any thermoplastic material which can be extruded to form a molded three-dimensional layer and/or a self-supporting near-molten sheet. The choice of particular thermoplastic material will, of course, depend on the use to which the final laminate will be put and the properties required by the application. Among thermoplastic materials which can be employed for the various layers of the laminate are polyolefins such as polyethylene and polypropylene, polyvinylhalides such as polyvinylchloride, polyvinylesters such as polyvinylacetate, styrene homopolymers and copolymers such as acrylonitrile butadiene styrene copolymers, acrylics such as polymethylmethacrylate, polycarbonates and nylons and blends or copolymers of the foregoing or other thermoplastic materials. The layers may be flexible, semi-rigid or rigid depending on the materials chosen which may be the same or different for the various layers of the laminate.

In those embodiments where the laminate comprises a three-dimensional layer fusion bonded to a substantially uniform, flat substrate layer, the substrate can be foamed or unfoamed depending on the laminate application. In some such cases the three-dimensional layer preferably has a somewhat lower melting temperature than the temperature at which the substrate can be extruded to facilitate the fusion bonding process. An unfoamed substrate of high density polyethylene (HDPE) is preferred when the laminate is to serve as a spray-suppression device to reduce splash and spray from vehicle wheels. In such a spray-suppression device, preferred materials of the three-dimensional layer include low density polyethylene (LDPE) and linear low density polyethylene (LLDPE). Other useful materials for the three-dimensional layer of spray-suppression devices include thermoplastic materials with a flexural modulus of generally less than about $14 \times 10^5$ kPa (about 200,000 psi), as determined by ASTM-D 790, preferably less than about 7 $\times 10^5$ kPa (about 100,000 psi).

A three-dimensional layer of the laminate made according to the process of this invention may be selected from any thermoplastic materials which are moldable to form a three-dimensional layer. The process is particularly applicable to those materials which ordinarily are subject to heat distortion during fusion bonding.

In addition to the above described polymer materials, both the substrate layer and the three dimensional layer can contain any of the known modifiers or adjuvants such as pigments, U.V.

stabilizers, antioxidants, slip agents (for internal mold release) and the like.

With reference to Figure 2 there is shown a schematic arrangement of one apparatus preferred for practicing one process of this invention. A sheet of extruded thermoplastic material 21 is provided in a near-molten state. The thickness of the extruded sheet can, of course, vary according to the intended use of the laminate. In practice, sheet thicknesses of from about 0.6 to about 12 millimeters are generally useful for laminates made according to this invention. When the laminates made according to this invention are intended for use as spray-suppression devices it is generally desirable that the sheet comprise HDPE having a thickness of from about 4 to 7 millimeters.

The near-molten sheet is preferably passed through a nip between sheet roll 23 and metering roll 24, which cooperate to serve as sizing rolls to impart a uniform cross section of controlled thickness to the freshly extruded sheet. Rolls 23 and 24 should be maintained at a temperature to prevent undue cooling of the near molten extruded sheet. These rolls can be maintained at temperatures from ambient up to about the sticking point, i.e., the temperature at which the extruded thermoplastic layer sticks to the roll. Higher than ambient temperatures are advantageously employed to prevent undue heat loss from the near molten sheet.

In practice when utilizing HDPE metering roll 24 is generally kept at a temperature of about 60-115°C (about 140-240°F). Because the near molten extruded sheet is in contact with sheet roll 23 for a extended period, the temperature of sheet roll 23 is generally kept at a higher temperature to prevent undue heat loss from the near molten extruded sheet into the sheet roll. In practice sheet roll 23 is generally kept at a temperature of about 76-120°C (about 170-250°F).

In the embodiment shown in Figure 2 sheet roll 23 serves as one of the sizing rolls. It is, of course, possible and sometimes desirable to employ separate sizing rolls independent of sheet roll 23. The sizing and sheet rolls can be made of any suitable non-sticking material. Typically such rolls have a smooth polished metal finish, often with a polymer impregnated surface, e.g. a fluorocarbon polymer impregnated surface.

Sheet roll 23 serves to carry the sized, near-molten substrate layer to a nip between the sheet roll and the rotating mold drum 28 where the lamination step of the process of this invention occurs. Thermoplastic material 25 is provided at extrusion temperatures and pressures by methods known in the art to an extrusion die 26 which cooperates to form an extrusion nozzle with rotating mold drum 28. The mold drum has a peripheral surface with a plurality of cavities therein. Thermoplastic material 25 is extruded onto the peripheral surface of rotating mold drum passing under the die at sufficient pressure to cause the molten thermoplastic material to enter the cavities to form a three-dimensional layer having a plurality of elongated projections extending from a substantially uniform backing 30. Mold drum 28 is generally maintained at a sufficiently low temperature, e.g. in the range of about 4-38°C (about 40-100°F), to allow the thermoplastic material injected into the mold cavities to solidify. Such temperatures of the mold drum can be advantageously maintained by utilizing a cooling medium within the mold drum, e.g. a circulating cooling fluid.

As the mold drum 28 rotates, the backing 30 of the three-dimensional layer often maintained in a near molten state is brought into intimate contact with the near molten extruded sheet at the nip between sheet roll 23 and mold drum 28 to effect fusion bonding of the three-dimensional layer and the extruded sheet. The mechanism of fusion from intimately contacting of the layers of the three-dimensional layer and the extruded sheet as they come into and remain in contact during rotation of the mold drum will vary depending on such factors as thickness of the layers and melt temperatures of the materials. In general when the layers are in intimate contact heat transfer from the previously exposed surface is substantially diminished, e.g. allowing the skin surface of at least one of the layers at the interface of the two layers to rise above the stick temperature of the thermoplastic material of said at least one layer, permitting wetting of the surfaces which upon cooling will result in a bonding together of the layers. In many instances it has been found desirable to provide additional cooling by blowing a cooling fluid, e.g. air, across the exposed surface of the substrate traveling along the mold drum after the nip between the mold drum and the sheet roll.

When the process of this invention is utilized to manufacture a three-dimensional laminate suitable for use as a spray-suppression device, a substrate layer can advantageously comprise an extruded sheet of HDPE and the three-dimensional layer can advantageously comprise LDPE or LLDPE. In such cases it is generally desirable that the substrate be substantially thicker than the backing of the three-dimensional layer. In such cases the process conditions are advantageously adjusted so that the interface temperature will rise above the melt temperature of the three-dimensional layer due to energy flow from the surface of the near-molten extruded sheet. In some cases insulating effects may cause the interface temperature to rise above the melt temperature of the material of both layers causing even more intimate penetration of the materials.

With reference to Figure 4, there is shown a graphic illustration of temperature profiles across the thickness of layers in a process of this invention. Curve A represents a temperature profile of a near-molten extruded sheet just prior to the substrate entering the nip between the sheet roll and mold drum. $A_1$ is the temperature of the surface of the sheet which is in contact with sheet drum at temperature $A_1$; $A_2$ is the temperature of the molten polymer within the sheet; and $A_3$ is the temperature of the surface of the skin of the sheet which becomes the interface surface of the laminate. Curve B represents a temperature profile of a backing of a three-dimensional layer prior to travel into the nip between the sheet roll and mold drum. $B_1$ is the temperature of the exposed skin of the backing; $B_2$ is the peak temperature within the backing which may be molten; and $B_3$ is the temperature of surface of the backing in contact with the cooled mold drum. Curve C (the dotted line connecting curves A and B) represents temperatures at the interface of the extruded sheet and the backing just after contact thereof, where the interface temperature rises above the stick temperature of the thermoplastic material of the backing to allow fusion.

Because there is such intimate contact between the three-dimensional layer and the mold drum it is necessary that the backing layer 30 of the three-dimensional layer not be allowed to cool to such a low temperature that the interface between the layers after contact at the nip does not rise above a fusion temperature. This can be achieved by balancing operating parameters around the mold drum, i.e. by adjusting the rotating speed of the mold drum, the temperature of the mold drum, or by applying energy to the backing surface 30, for instance by radiant heater 32 transferring infrared energy 31 the backing layer 30 to maintain an elevated temperature at least at the exposed surface of the backing.

Removal of the three-dimensional layer occurs after the laminate has passed through the nip between mold drum 28 and the cooling roll 35. As the laminate passes through the nip the three-dimensional surface is extracted from mold cavities as the laminate is provided with a reverse bend traveling along the surface of cooling roll 35. Cooling roll 35 serves to remove the three-dimensional structure from the mold cavities without damaging the three-dimensional structure and to assist in balancing heat removal from the laminate by heat transfer from the substrate into the cooling roll which is maintained at temperatures of at least about 10°C (50°F) and preferably at temperatures less than 93°C (200°F). Because of the intimate contact between the smooth surface of the substrate and the cooling roll the direction of heat transfer is reversed from that when the three-dimensional surface was on the mold drum with heat transfer on the cooling roll principally in the direction away from the three-dimensional surface. The balancing of net heat flow from opposing sides of the laminate is essential to achieving a flat linear product. Unless heat flows are balanced from opposite surfaces, the laminate will have a warped, wavy appearance which is unsuitable for most applications. In many instances it has been found desirable to provide additional cooling by blowing a cooling fluid, e.g. air, across the exposed surface of the three-dimensional air passing over the cooling roll.

After leaving the cooling roll the three-dimensional laminate is desirably passed through the cooling zone where a cooling fluid is passed across one or both surfaces of the laminate to provide additional balanced heat transfer from both surfaces. Such convective heat transfer further ensures that an unwarped laminate will be achieved.

In an alternative embodiment of this invention the sheet roll 23 can be replaced with a mold drum and separate extrusion die similar to mold drum 28 and extrusion die 26 to provide a second three-dimensional layer of thermoplastic material to be fusion bonded to the three-dimensional layer formed on mold drum 28. This will provide a laminated sheet having a three-dimensional geometry on both outer surfaces. The three-dimensional surfaces can be the same or different. For instance, a laminate can be provided with a grass-like surface on both sides, with cylinders on both sides, with a grass-like surface on one side and cylinders on the other side or with a variety of other surfaces (e.g. ribs) or a combination of surfaces. Because the backing of such three-dimensional surfaces is generally thin and high heat transferred into the mold drums is desired to form the three-dimensional surfaces, the temperature of the backing of such three-dimensional layers will generally be too low to effect fusion bonding. By providing thermal energy, e.g. by radiant energy sources, to the backing of such three-dimensional layers fusion bonding can be readily effected as the backings contact each other in the nip between the two mold drums.

As the two three-dimensional layers pass through a nip formed by the two rotating mold drums, intimate contact required for fusion bonding will occur. Intimate contact of the two layers should be maintained as the interface of the layers cool to effect fusion bonding. This contact can be maintained by allowing one of the three-dimensional layers to be extracted from the mold drum cavities immediately after the layers pass through the nip. The two layers will then be carried on the surface of the other mold drum to maintain intimate contact during cooling. The other three-dimensional layer can be extracted from the mold drum by providing a third roll, e.g. similar to cooling roll 35. As the laminate is carried on such third roll, the extraction of the second three-dimensional surface from cavities of the mold drum is effected and a reverse bend is provided to assist in providing a flat laminate.

In another alternative embodiment of the process of this invention, continuous sheets of thermoplastic laminates can be formed having a three-dimensional geometry on both outer surfaces of the laminate. This is particularly advantageous in providing a spray-suppression device with improved anti-sail properties. Such spray-suppression device is provided with ribs extending from the substrate surface opposite of the spray-suppression surface. Such ribs can extend across the entire substrate surface at intervals or be limited to the edges. Ribs can be generally rectangular in cross-section or of other cross-sectional shapes, e.g. triangular, semi-circular, etc. Ribs will generally maximize the stiffness, i.e. resistance to bending, of the laminate. In such devices ribs extend at least partially across the exposed surface of the substrate layer. In some cases it is preferred that ribs are provided only at the outer vertical edges of a spray-suppression device as it is mounted to provide a guard against abrasion of decoration on the exposed back surface of the substrate. In other cases it is preferred that the ribs extend vertically over a major portion of the exposed surface of the substrate to provide substantial improved resistance to bending. Ribs also allow optimum use of raw materials; that is, a stiffer laminate can be provided by using the same or less total thermoplastic material in a layer of the laminate.

Such ribs can advantageously be provided in the laminates made according to the process of this invention by providing cavities, e.g. grooves, in sheet drum 23. As a molten sheet of thermoplastic material is provided in the nip between sizing roll 24 and a grooved sheet drum 23, pressure provided by the sizing roll will force the thermoplastic material into the cavities of the sheet drum. The sheet drum is maintained at a temperature such that material in the grooves will cool sufficiently as the drum rotates the near-molten sheet of thermoplastic material into the nip between the sheet drum and mold drum so that the desired rib geometry is maintained in the laminate formed by fusion bonding of the two layers being formed on each of the drums. Such forming of ribs or other shapes is described by Bramhall in U.S. Patent 4,323,533, incorporated herein by reference.

The temperature of the sheet drum should not be so cool, however, that the temperature of the formed sheet is reduced to a level that fusion bonding will not occur. If such reduced temperatures cannot be avoided, fusion bonding can be effected by providing thermal energy to the interface surfaces, e.g. by radiant energy sources, to permit fusion bonding.

In some cases it may be desirable to provide an interlayer between the at least one three-dimensional layer and the substrate layer, which may also be three-dimensional. Such interlayer can be a third layer of thermoplastic material, foamed or unfoamed, e.g. an interlayer of high flex modulus to provide rigidity to the laminate.  Such high flex modulus interlayer can comprise a mineral loaded thermoplastic, e.g. nylon or styrenic material.  Among the many other interlayers which may be useful include metal, cloth or screens, glass cloth and the like.

In some instances when producing a three-dimensional laminate for use as a spray-suppression device it is sometimes desirable to provide a third layer as a break-resistant intervening layer between the substrate and the three-dimensional layer.  As described by Ellis in U.S. Patent 4,391,870, incorporated herein by reference, such intervening layer may include a non-woven fabric having a polymeric coating on both surfaces.  Such polymer coatings should be compatible with the materials of the substrate and the three-dimensional layer, i.e. be fusion bondable to both layers.  When polyethylene materials are used for the substrate and three-dimensional layer a useful coating for such non-woven fabrics includes polymers of ethylene and vinyl acetate.  Such intervening layers can be inserted into the laminate by feeding such layers to the nip between sheet roll 23 and mold drum 28 or alternatively by first contacting the substrate layer with the intervening layer at the nip between metering roll 24 and sheet roll 23.

In such cases the non-woven fabric of the intervening layer provides some thermal insulation and it may be necessary that the exposed backing 30 of the three-dimensional layer be provided at a somewhat higher temperature to assure fusion bonding of the three-dimensional layer to the intervening layer. Similarly, operating parameters such as sheet roll temperature, mold drum temperature and mold drum rotational speed can also be varied to ensure that interface temperatures fall below delamination temperatures to protect the integrity of the laminate as the three-dimensional material is extracted from the mold drum. Alternatively, external heating can be advantageously used to raise and maintain the temperature of the backing of the three-dimensional layer at or near its stick temperature. As illustrated in Figure 2, such external heating can be provided by radiant energy 31 from a radiant heater 32.

The following examples are given to illustrate an embodiment of the process of this invention in making a spray-suppression device. Such examples are merely illustrative of the wide variety of products that can be produced by following the general teachings herein.

<u>EXAMPLE 1</u>

This illustrates a preferred apparatus and method of this invention for making a three-dimensional laminate useful as a spray-suppression device.

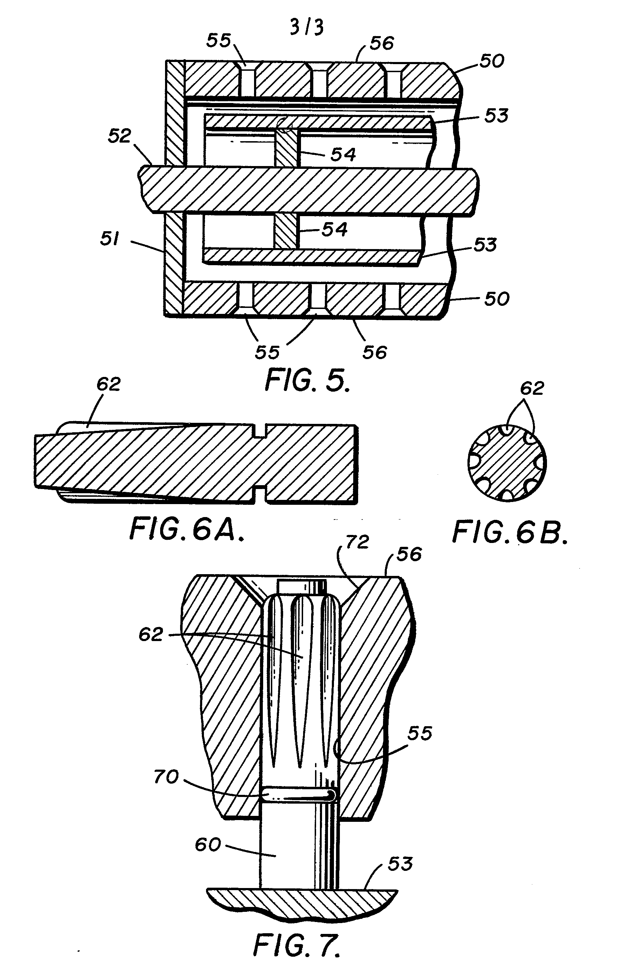

A rotating drum mold was prepared as partially illustrated in Figure 5. An outer shell 50 having a nominal width of 127 cm (50 inches) was attached by head 51 to a central journal 52. Inner shell 53 is supported by braces 54 between the inner shell and the journal. A plurality of cavities 55 are located in the outer shell. Open spaces between the inner and outer shell provide passages for directing a cooling medium to facilitate solidification of thermoplastic material molded on the drum.

The drum was constructed of steel; the outer surface 56 was polished, hardened and treated with a fluorocarbon to promote polymer release. Each cavity located on 1.3 cm (0.524 inch) centers was filled with a brass pin as illustrated in Figures 6A and 6B. Such pins were provided with eight (8) tapered flutes 62 around the circumference to provide a mold for a bud of grass-like blades. The cooperation of such pins with the cavities of the mold drum is illustrated in Figure 7 where the base of the pin 60 is supported on the outer surface of inner drum 53 and an O-ring type seal 70 restrains the outward flow of cooling fluid through the cavity. The chamfered edge 72 of cavity 55 assists in providing a transitional surface of low residual stress between the blade-like elements formed in flutes 62 and the backing layer formed on surface 56 of the mold drum.

An extrusion die was prepared having an arcuate surface following a 25.4 cm (ten inch) radius which matched the periphery of the mold drum. A somewhat semi-circular transverse slot was located within leading, trailing and side margins in the arcuate surface of the die. The mold drum and die were oriented as generally shown in Figure 3 such that the trailing margin of the die was located closer to the surface of the mold drum than the leading margin of the die. The gap between the trailing margin and the mold drum provided an extrusion nozzle for forming a substantially uniform sheet.

A composition of low density polyethylene (LDPE) was prepared for extrusion at high temperature and pressure through the transverse slot of the extrusion die onto the mold drum. The LDPE composition comprised 99.2 percent by weight LDPE having a density specified to be in the range from 0.915 to 0.92 (determined by ASTM-D 792) and a melt index specified to be in the range of 18 to 20 (determined by ASTM-D 1238). The composition also contained adjuvants not considered critical to the process including UV stabilizer, colorants, slip agent and antioxidant. The LDPE composition was extruded by conventional means and supplied through the extrusion die to the surface of the rotating mold drum at a temperature of about 204°C (400°F) and a pressure of about 7000 kPa (about 1000 psig). The mold drum was rotated at about 0.75 rpm and was maintained at a temperature of about 18°C (65°F) through circulation of high volumes of water through the passages within the drum.

As the drum rotated beyond the edge of the extrusion nozzle there was provided a thin layer of thermoplastic material of about 0.4 mm (0.016 inches) thick which provided a backing from which a grass-like three-dimensional surface was formed within the cavities of the mold. Simultaneous with such con tinuous injection molding of the three-dimensional layer, a composition of about 99% HDPE was extruded at a temperature of about 204°C (about 400°F) to form an extruded sheet of HDPE which was passed in a near molten state through the nip between metering roll 24 maintained at about 67°C (about 153°F) and sheet roll 23 maintained at about 113°C (about 235°F). The nip between the metering roll and sheet roll was provided as an extruded sheet of about 4.7 mm (0.187 inches) thick. The near-molten extruded sheet was carried on the rotating sheet roll to the nip between the sheet roll and the mold drum where the surface of the extruded sheet just prior to entering the nip was at a temperature of about 166°C (about 330°F). The exposed surface of the three-dimensional layer just prior to entering the nip was about 68°C (155°F). The nip between the sheet roll and the mold drum was sufficiently small that sufficient pressure was applied to effect intimate contact between the near molten substrate and the backing of the three-dimensional layer. The interface temperature rapidly equilibrated to about 121°C (250°F), a temperature above the stick temperature of the LDPE material of the three-dimensional layer. Consequently as the two layers continued to rotate around the mold drum fusion bonding was effected. A cooling roll 35 was located 180° around the mold drum from the sheet roll. The laminate was transferred from the mold drum to the cooling roll which was maintained at about 88°C (190°F). The laminate was then conveyed along a horizontal conveyor where convection heat loss from the grass-like surface was effected by a plurality of fans blowing ambient air onto the grass-like surface.

The laminated three-dimensional layer was cut into spray-suppression devices having planar dimensions of 61 cm by 76 cm (24 inches by 30 inches).

EXAMPLE 2

This example illustrates the exceptional performance properties of spray-suppression devices made from a laminated three-dimensional layer prepared generally according to Example 1.

The laminated three-dimensional layer was tested for low temperature durability properties in two convenient ways. The first such test is a bend-to-break test. This test is performed on full size spray-suppression device which in its most common form comprises a 61 cm by 76 cm (24 inch by 30 inch) section of laminated product and representing the size of a conventional truck rain flap. The laminated product is conditioned for 24 hours at about -30°C (about -20°F) the conditioned laminated product is tightly clamped along a 61 cm (24 inch) side between a pair of jaws of a device which includes a confining track into which the 76 cm (30 inch) sides of the product are fitted which allows the product to be moved horizontally but not vertically. The jaws are then rotated angularly downward from the horizontal by means of a conventional drive mechanism through a maximum of 180 degrees at a rate of about 14 degrees per second. This places the upper face of the product (the three-dimensional grass-like surface) under tension and the lower face (the thick substrate) in compression. If cracking through the full thickness of the bending product occurs a clutch mechanism deactivates the drive mechanism and the traversed angle of rotation from the horizontal is read from an adjacent scale to provide the maximum angle through which the test specimen was capable of bending before breakage occurs at a temperature on the order of about -30°C (about -20°F). Spray-suppression devices produced according to the process of Example 1 achieved at least 60 degrees without fracturing through the full laminated structure. Controls for this test comprise the grass-like LDPE layer of a structure disclosed by Doleman, et al in U.S. patent 3,590,109 fusion bonded directly to a HDPE substrate. Such controls generally crack at an angle of about 30 to 35 degrees. The exceptionally higher bending required to fracture the laminated device of this invention is believed to result from substantially lower levels of residual stress inherent in the three-dimensional layer.

A second test useful in demonstrating the low temperature durability of spray-suppression device according to this invention is a test for low temperature impact resistance which measures the energy in foot pounds required to crack test specimens under specified conditions of impact using a fixed weight, variable height falling tup. The technique used is commonly called the Bruceton Staircase Method and involves a combination of portions of ASTM D1709, part 36; D2444, part 26 and D3029, part 35. The procedure establishes the height which will cause 50 percent of the specimens tested to fail using a constant tup weight. According to the method the tup is repositioned after each impact to the next higher or lower increment depending upon the response from the previous specimen. Increments are 15.24 cm (6 inch) units from 15.24 to 229 cm (6-90 inches). This will result ideally in half of the specimens passing and half failing. The average height at which this occurs when expressed as the product of the tup weight is termed the 50 percent pass/fail value. The impact resistance is the energy in foot pounds required to produce 50 percent failures and is determined for any given sample as the product of the mean drop height times the tup weight. Failure is signified by the presence of any crack or split created by the impact of the falling tup which can be seen by the naked eye. At least twenty 12.7 cm square specimens (5 inch squares) are cut from a laminated product section. Specimens are conditioned at about -30°C (about -20°F) for at least 16 hours prior to testing. The test procedure involves presetting the tup to the estimated 50 percent pass/fail height, placing the specimen over the sample holder and releasing the tup to allow it to free fall to impact. If impact does not result in catastrophic failure, the specimen is closely examined for evidence of any crack or split. If the specimen passes the tup is reset to the next higher increment whereas if it fails the tup is reset at the next lower increment. If the tup is at maximum or minimum height its weight is adjusted as necessary to reestablish a practical working range. If weight adjustment cannot be made the specimen is recorded as pass or fail.

Spray-suppression devices made according to the process of Example 1 with a three-dimensional layer of LDPE fusion bonded to a substrate of HDPE achieved an impact value of about 80 joules (about 60 foot pounds). Controls where a three-dimensional layer of LDPE, having a structure as disclosed by Doleman, et al. in U.S. patent 3,590,109, is fusion bonded to a HDPE substrate typically achieve impact values only as high as about 20 joules (about 15 foot pounds).

The preceding description is set forth for purposes of illustration only and is not to be taken in a limited sense.  Various modifications and alterations will be readily suggested to persons skilled in the art.  It is intended, therefore, that the foregoing be considered as exemplary and that the scope of the invention be ascertained from the following claims.

CLAIMS

1. A process for forming a laminate made up of a three-dimensional, molded thermoplastic layer fusion bonded to a generally flat thermoplastic backing layer, comprising:

(a) providing at least one rotating drum having in the peripheral surface thereof a plurality of cavities,

(b) extruding onto the peripheral surface of said drum a molten thermoplastic material under sufficient pressure to cause the molten thermoplastic material to enter said cavities, to form a three-dimensional layer having a plurality of elongated projections extending from a backing having an exposed surface; and

(c) then, while said three-dimensional layer remains on said drum, applying a near molten extruded sheet subsubstrate layer of thermoplastic material onto the exposed surface of said three-dimensional layer, at least one of said layers being at temperatures sufficient to cause said layers to fusion bond to each other.

2. The process of Claim 1 wherein said backing layer is applied by passing said layers through a nip formed by the drum and a roller.

3. The process of Claim 2 wherein the laminate is maintained on the drum until sufficiently cooled to be stripped from said drum without delamination or damage to the projections and is then stripped from said drum.

4. The process of Claim 3 wherein the substrate layer is extruded into the nip formed by the drum and the idler roll.

5. The process of claim 3 wherein the three-dimensional molded, thermoplastic layer is a grass-like layer with a plurality of elongated, blade-like projections extending substantially straight up from a backing.

6. The process of claim 5 wherein a fabric core layer is applied intermediate the exposed surface of the three-dimensional layer and the backing layer.

7. The process of claim 6 wherein the fabric core layer comprises a non-woven polyamide fabric encapsulated on each side with an adhesive layer of a copolymer of ethylene and vinyl acetate.

8. The process of claim 7 wherein said exposed surface is heated to a temperature above the stick temperature of thermoplastic material of said three-dimensional layer.

9. A process for forming a laminate sheet having three-dimensional surfaces on both outer surfaces thereof comprising:

(a) providing a first rotating drum having in the peripheral surface thereof a plurality of cavities;

(b) providing a second rotating drum having in the peripheral surface thereof a plurality of cavities;

(c) extruding onto the peripheral surfaces of each of said drums molten thermoplastic material and causing said molten thermoplastic material to enter said cavities of each of said drums to form a layer having a three-dimensional surface on one side thereof and a generally flat exposed backing surface;

(d) then, while said layers remain on each of said drums, allowing the generally flat exposed backing surfaces to contact each other at a nip between said rotating drums, at least one of said backing surfaces being at a temperature sufficient to cause said layers to fusion bond to each other; and

(e) extracting at least one of said three-dimensional surfaces from one of said mold drums.

10. A spray-suppression device comprising a substrate layer having ribs extending at least partially across the exposed surface of said substrate layer and a grass-like, three-dimensional layer having a plurality of blade-like elements extending from a base.

11. The device of claim 10 wherein said ribs have a generally rectangular cross-section and are at least at the outer vertical edges of said device.

12. The device of claim 10 wherein said ribs extend vertically over a major portion of said substrate layer.

1/3

PRIOR ART

FIG. 1.

FIG. 2.

FIG. 3.

FIG. 4.

FIG. 5.

FIG. 6A.

FIG. 6B.

FIG. 7.